# EUROPEAN PATENT APPLICATION

(11) **EP 0 567 225 A1**
(43) Date of publication of application: **27.10.1993**
(21) Application number: 93302120.6
(22) Date of filing: 19.03.1993
(51) Int. Cl.: C02F 1/36

(54) **Treatment of water**

(30) Priority: 20.03.1992 GB 9206079
(71) Applicant: BIWATER TREATMENT LIMITED, Heywood, Lancashire, OL10 2DX (GB)
(72) Inventor: Davies, Peter Warren, Todmorden Lancashire OL14 7HQ (GB); Greenhalgh, Spencer Harold, Bury Lancashire BLO 9TS (GB); Donnelly, Judith Karina, Chapel Allerton Leeds LS7 4LP (GB); Stentiford, Edward Ian, Bardsley Leeds LS17 9AN (GB)
(74) Representative: Quest, Barry

(57) **Abstract**

A method of treatment of water contaminated with impurities such as cryptosporidia oocysts includes subjecting the water to an ultrasonic vibration at frequencies of 20,000 Hz or higher sufficent to either rupture cell walls of the oocysts or make them non-viable thus removing the risk from cryptosporidia and rendering the water potable.

## Description

This invention relates to the treatment of water to remove impurities in an otherwise potable water supply, and, more particularly, to render innocuous such impurities as cryptosporidium oocysts, giardia organisms, pesticidal compound traces and organic compound traces.

Water is an important vehicle forthe transmission of cryptosporidial infection. Current water treatment processes cannot be relied upon to guarantee that no Cryptosporidium oocysts will enter the mains supply. If a water source becomes sufficiently contaminated, then significant numbers of oocysts may enter the treated water supply.

The present invention has been made in order to overcome the above mentioned problems by providing a convenient and effective method of water treatment

According to one aspect of the present invention there is provided a method of treatment of water contaminated with cryptosporidium oocysts including subjecting the water to an ultrasonic vibration, at frequencies of 20,000 Hz or higher, sufficient either to rupture cell walls of the oocysts or make them non-viable hence removing the risk from cryptosporidia and thereby rendering the water potable.

In another aspect of the invention, there is provided a method of treatment of water contaminated with giardia organisms including subjecting the water to an ultrasonic vibration at frequencies of 20,000 Hz or higher, sufficient to effect destruction of the giardia organisms and render the water potable.

In a further aspect of the invention, there is provided a method of treatment of water contaminated with traces of pesticidal compounds including subjecting the water to an ultrasonic vibration, at frequencies of 20,000 Hz or higher, sufficient to effect disintegration or degradation of the pesticidal compounds and render the water potable.

In yet a further aspect of the invention, there is provided a method of treatment of water contaminated with traces of organic compounds including subjecting the water to an ultrasonic vibration, at frequencies of 20,000 Hz or higher, sufficient to effect disintegration or degradation of the organic compounds and render the water potable.

Preferably, in each aspect of the invention, the water is additionally exposed to a source of ultra-violet light to provide an oxidant enhancing the effect of the ultra-sonic vibration.

Alternatively or additionally, the water is treated with ozone as an oxidant/disinfectant to enhance the effect of the ultrasonic vibration.

Alternatively, or additionally, the water is treated with hydrogen peroxide as an oxidant to enhance the effect of the ultrasonic vibration.

Desirably, the treatment of the water with hydrogen peroxide is combined with treatment of the water with ultra-violet light, the hydrogen peroxide being added prior to exposing the water to the ultra-violet light, thereby utilising the hydroxyl radical effect both to disrupt the micro-organisms and to provide an enhanced level of disinfection.

Suitably, the various treatments are complementary, and serve to raise the oxidation free electron voltage.

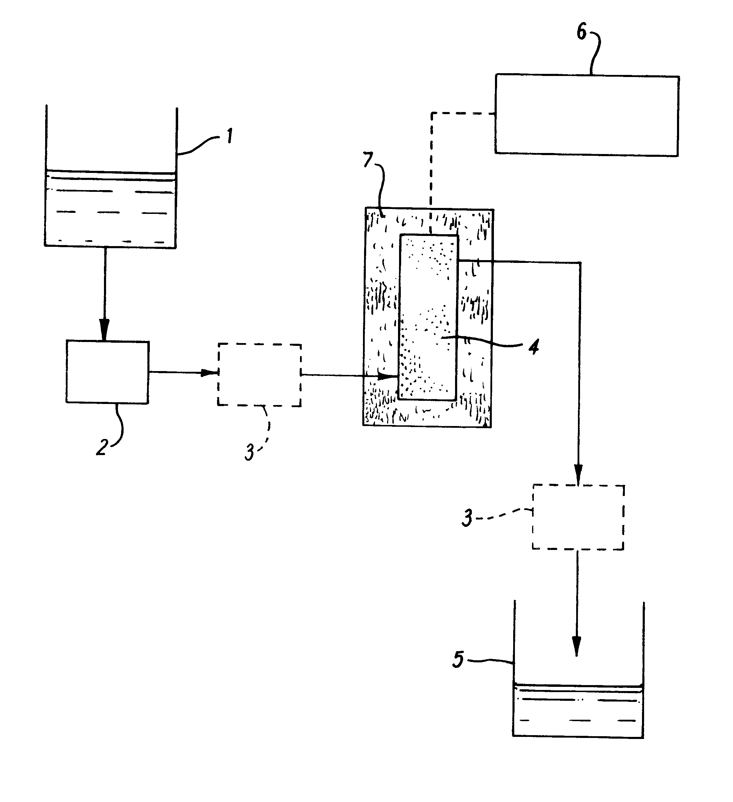

A specific embodiment of the invention will now be described by way of example only, and with reference to the accompanying drawing which is a schematically depicted flowsheet for the process.

Referring to the drawing, water to be treated is pumped from the feed tank 1 by means of pump 2 through an optional additional oxidant unit 3 to the ultrasound unit 4 with its surrounding water jacket unit 7. Aunit 6 acts as system controller. The treated water is passed through a further optional additional oxidant unit 3 before entering a holding tank 5 for the treated water.

Using a high intensity ultrasonic processor, the electrical energy was transmitted to a piezoelectric transducer within a converter where it was changed to mechanic vibration, creating pressure waves in the water and consequent cavitation effects. As free radicals and other active oxygen species are generated when water is sonicated, the additional use of ultra-violet light, ozone or hydrogen peroxide is likely to enhance any effect produced by ultrasound and thus may reduce power costs.

A range of tests at different temperatures, contact times and power inputs were conducted on different concentrations of oocysts.

In batch tests, it has been found that by subjecting to ultrasonic vibration a sample of water containing 25,000 cryptosporidia oocysts per 100 ml for a period of 2 minutes the viable oocyst content is reduced to 3,000 per 100 ml, and that after a further period of 2 minutes no viable oocysts could be detected.

In another batch test, a sample of water containing 78,000 cryptosporidia oocysts per 100 ml was subjected to ultrasonic vibration and was found to have an oocyst concentration of 29,000 oocysts per 100 ml after 2 minutes, 9,000 oocysts per 100 ml after 4 minutes, 500 oocyst per 100 ml after 5 minutes and after 10 minutes to have no viable oocysts detectable.

In further tests with samples of tap water at 7°C, previously spiked with purified Cryptosporidium oocysts and with a contact time of approximately 3.6 seconds within a flow cell, at a pumping speed of 19 litres per hour, the following results were obtained with a frequency of 20 kHz and an electrical input of 140 watts, whereas only 2.5 x 10² oocysts per litre were recovered when power was available to the transducer, 2.4 x 10⁵ oocysts per litre were recovered and under identical circumstances excepting that there was no ultrasonic power input.

Thus, under the conditions stated power ultrasound treatment resulted in a 99.9% reduction in recoverable intact oocysts in the water samples tested. In a related test the intact oocysts recovered following similar ultrasound treatment were found to be non-viable.

## Claims

1. A method of treatment of water contaminated with cryptosporidia oocysts including subjecting the water to an ultrasonic vibration, at frequencies of 20,000 Hz or higher, sufficient either to rupture cell walls of the oocysts or make them non-viable hence removing the risk from cryptosporidia and thereby rendering the water potable.

2. A method of treatment of water contaminated with giardia organisms including subjecting the water to an ultrasonic vibration at frequencies of 20,000 Hz or higher, sufficient to effect destruction of the giardia organisms and render the water potable.

3. A method of treatment of water contaminated with traces of pesticidal compounds including subjecting the water to an ultrasonic vibration, at frequencies of 20,000 Hz or higher, sufficient to effect disintegration or degradation of the pesticidal compounds and render the water potable.

4. A method of treatment of water contaminated with traces of organic compounds including subjecting the water to an ultrasonic vibration, at frequencies of 20,000 Hz or higher, sufficient to effect disintegration or degradation of the organic compounds and render the water potable.

5. A method of treatment of water according to any preceding claim wherein the water is additionally exposed to a source of ultra-violet light to provide an oxidant enhancing the effect of the ultrasonic vibration.

6. A method of treatment of water according to any preceding claim wherein the water is treated with ozone as an oxidant/disinfectant to enhance the effect of the ultrasonic vibration.

7. A method of treating water according to any preceding claim wherein the water is treated with hydrogen peroxide as an oxidant to enhance the effect of the ultrasonic vibration.

8. Amethod of treatment of water according to claim 7 when dependent on claim 5 wherein the hydrogen peroxide is added prior to exposing the water to the ultra-violet light, thereby utilising the hydroxyl radical effect both to disrupt the micro organisms and to provide an enhanced level of disinfection.

9. Amethod of treatment of water according to claim 5 and claim 6 and claim 7 wherein the various treatments are complementary and serve to raise the oxidation free electron voltage.
